# EUROPÄISCHE PATENTSCHRIFT

(11) **EP 0 350 853 B1**
(45) Veröffentlichungstag und Bekanntmachung des Hinweises auf die Patenterteilung: **16.06.1993**
(21) Anmeldenummer: 89112642.7
(22) Anmeldetag: 11.07.1989
(51) Int. Cl.: B01D 63/02, B01D 46/24, B01D 46/54

(54) **Verfahren und Vorrichtung zum Filtrieren von gasförmigen oder flüssigen Dispersionen**
Process and device for filtering gaseous or liquid dispersions
Procédé et appareil pour filtrer des dispersions gazeuses ou liquides

(30) Priorität: 14.07.1988 DE 3823858
(43) Veröffentlichungstag der Anmeldung: 17.01.1990
(73) Patentinhaber: Akzo Nobel N.V., 6824 BM Arnhem (NL)
(72) Erfinder: Schulz, Günter, Dr., D-8150 Holzkirchen (DE)
(74) Vertreter: Fett, Günter

(56) Entgegenhaltungen:
- DE-B- 1 642 811
- GB-A- 2 135 902

## Beschreibung

Die Erfindung betrifft ein Verfahren und eine Vorrichtung zum Filtrieren von gasförmigen oder flüssigen Dispersionen durch die poröse Wand von Hohlfäden durch Einstellen und Aufrechterhalten einer Druckdifferenz zwischen Dispersionsseite und Filtratseite (Permeatseite), bei welchem die permeablen Bestandteile der Dispersion nur durch die Poren der Wand der Hohlfäden strömen.

Die Erfindung betrifft also ein sogenanntes Dead-End-Filtrierverfahren, auch statisches Filtrierverfahren genannt, und eine hierzu geeignete Vorrichtung. Dieses Filtrierverfahren ist dadurch charakterisiert, daß alle permeablen Bestandteile einer zu filtrierenden Dispersion nur durch das Filtermittel, im vorliegenden Fall also durch die Poren der Wand von Hohlfäden, hindurchtreten und sich die vom Filtermittel, also von der porösen Wand der Hohlfäden, zurückgehaltenen Bestandteile der Dispersion vor dem Filtermittel ansammeln oder sich an diesem ablagern und einen sogenannten Filterkuchen bilden. Hierdurch tritt ein allmähliches Nachlassen der Filterleistung ein, was schließlich eine Reinigung des Filtermittels, beispielsweise durch Rückspülen, oder ein Auswechseln des Filtermittels notwendig macht.

Zum Erreichen hoher Filterleistungen, also großer Permeatdurchflüsse, wurden auch schon Hohlfäden mit einer porösen Wand (poröse Hohlfäden) eingesetzt, die einen sehr hohen Porenanteil bezogen auf die Hohlfadenwandoberfläche aufwiesen. Die Hohlfäden sind hierbei jedoch im wesentlichen parallel zur Längsachse des Strömungskanals für die zu filtrierende Dispersion angeordnet. Nachteilig an den bekannten Filtrierverfahren und den hierzu verwendeten Vorrichtungen ist somit, daß bei diesen die Hohlfäden von der Dispersion im wesentlichen in deren Längsrichtung angeströmt werden. Die Länge der Hohlfäden entspricht hierbei im wesentlichen der Länge der Filtereinheit, also beispielsweise der sogenannten Hohlfadenfilterkerze. Die Länge solcher Filterkerzen ist häufig durch die Abmessungen bereits bestehender Filtereinrichtungen vorgegeben, denn häufig ist man bestrebt, eine vorhandene Filtereinrichtung im wesentlichen unverändert zu belassen und lediglich herkömmliche Filterkerzen durch Hohlfadenfilterkerzen zu ersetzen.

Dies hatte zur Folge, daß bei den bisher bekannten Hohlfadenfilterkerzen die Länge der porösen Hohlfäden relativ groß bemessen werden mußte, was zu einem relativ hohen Strömungswiderstand im Lumen der Hohlfäden, also zu einem hohen Druckverlust, und demzufolge zu einer erheblichen Verminderung der Filterleistung führte. Als Beispiel hierfür sei auf die GB-A-2 135 902 verwiesen, bei welcher die in Längsrichtung des Gehäuses also des Strömungskanals d.h. in Strömungsrichtung sich erstreckenden porösen Hohlfäden an ihrem einen Ende verschlossen und an ihrem anderen, nämlich offenen Ende in einem scheibenförmigen Einbettmassekörper eingebettet sind.

Ein weiterer Nachteil besteht bei diesen bekannten Filterkerzen darin, daß eine Verlängerung der Filterkerze auch zu einer Verlängerung der porösen Hohlfäden und damit zu einer Erhöhung des Druckverlustes in den Hohlfäden führt. Dies hat zur Folge, daß die durch eine Verlängerung der Filterkerze erzielte Leistungssteigerung nicht proportional der durch die Verlängerung der porösen Hohlfäden erhaltenen Filterflächenvergrößerung ist. Eine weitere Verlängerung der Hohlfadenfilterkerze und damit der Hohlfadenlänge führt bei den bekannten Hohlfadenfilterkerzen somit zu einer immer geringeren Leistungszunahme, bis schließlich ein Wert erreicht wird, der durch weitere Verlängerung der Hohlfadenfilterkerze praktisch nicht mehr überschritten werden kann. Dieses Problem tritt insbesondere bei Filterkerzen mit Hohlfäden auf, die einen geringen Innendurchmesser und einen hohen Porenanteil, also eine hohe Permeabilität, aufweisen.

Aus der DE-B-1 642 811 ist eine Diffusionszelle, also nicht eine Vorrichtung zum Filtrieren von Dispersionen, bekannt, bei welcher jeweils ein Gewebe aus durchlässigen Hohlfäden in einem ebenen Rahmen angeordnet ist und mehrere - dargestellt sind maximal acht und mehr - dieser Hohlfäden-Rahmen-Konstruktionen übereinander in einem Gehäuse angeordnet sind. Durch die Anordnung nur je eines Hohlfadengewebes in einem Rahmen ist bei dieser Diffusionszelle der Abstand der Hohlfadenschichten benachbarter Rahmen sehr groß und demzufolge der sogenannte Füllgrad - also die Hohlfadenmasse pro Volumeneinheit - im Strömungskanal sehr gering. Auch die Anordnung der Hohlfäden in Rahmen ist sehr aufwendig und umständlich und man benötigt viel Rahmenmasse für wenig Hohlfadenmasse. Außerdem sind dort nur relativ flache bzw. kurze Diffusionszellen dargestellt, bei denen der längste Strömungsweg in den Hohlfäden allenfalls ausnahmsweise gleich oder kürzer ist als der längste Strömungsweg für das die Hohlfäden umströmende Fluid. Trotz dieser gegenüber der aus der zitierten GB-A bekannten Filtriervorrichtung über 15 (!) Jahre älteren Veröffentlichung dieser Diffusionszelle wurde das Prinzip der Queranströmung der Hohlfäden in Filtriervorrichtungen auch noch in den darauffolgenden knapp 4 Jahren, insgesamt also ca. 19 Jahre, - offenbar aufgrund der Blindheit der Fachwelt - nicht angewandt.

Der vorliegenden Erfindung liegt daher die Aufgabe zugrunde, ein Verfahren und eine Vorrichtung zur Verfügung zu stellen, mit welchen zumindest die oben geschilderten Nachteile beseitigt werden und insbesondere eine einer Verlängerung der Hohlfadenfilterkerze direkt proportionale Steigerung ihrer Filterleistung erreicht wird.

Diese Aufgabe wird erfindungsgemäß durch ein Verfahren gemäß Anspruch 1 und eine Vorrichtung gemäß Anspruch 3 gelöst.

Bei dem erfindungsgemäßen Verfahren bzw. der erfindungsgemäßen Vorrichtung strömt die zu filtrierende Dispersion im wesentlichen parallel zur Längsachse der Vorrichtung (Filter-kerze) und sind die porösen Hohlfäden quer zu dieser Strömungsrichtung - also nicht parallel, auch nicht im wesentlichen parallel, zur Längsachse der Vorrichtung - angeordnet, so daß sie von der Dispersion im wesentlichen quer angeströmt werden. Die Hohlfäden sind dabei vorzugsweise geradlinig ausgebildet.

Beim Gegenstand der Erfindung entspricht somit die größte Länge der Hohlfäden im wesentlichen dem (größten) Durchmesser der Filterkerze und damit der längste Strömungsweg für die permeierten Bestandteile der Dispersion in den Hohlfäden im wesentlichen nur dem halben (größten) Durchmesser der Filterkerze. Bei Bemessung der erfindungsgemäßen Vorrichtung analog herkömmlicher (Hohlfaden-)Filterkerzen, deren Länge ein Vielfaches ihres Durchmessers beträgt, ist der längste Strömungsweg für die permeierten Bestandteile der Dispersion somit wesentlich kürzer als der längste Strömungsweg der Dispersion beim Umströmen der Hohlfäden vor der Filtrierung, also die Länge des mit den porösen Hohlfäden ausgefüllten Strömungskanals für die zu filtrierende Dispersion.

In besonders bevorzugter Ausgestaltung des Gegenstands der Erfindung sind die porösen Hohlfäden im wesentlichen senkrecht zur Längsachse des Strömungskanals für die zu filtrierende Dispersion angeordnet, so daß die porösen Hohlfäden im wesentlichen senkrecht zu ihrer Längsachse von der Dispersion angeströmt und umströmt werden.

Das Filtrat (Permeat) tritt vorzugsweise an der äußeren Umfangsfläche der Filterkerze aus den porösen Hohlfäden in einen Filtratsammelraum oder -kanal.

Die Hohlfadenanordnung der erfindungsgemäßen Vorrichtung kann dadurch erreicht werden, daß aus einem üblichen Hohlfadenflächengebilde, also beispielsweise einer Hohlfadenmatte, einem Hohlfadengewebe, einem Hohlfadengelege u. dgl., einzelne Filterelemente ausgestanzt und übereinandergestapelt werden und dieses so erhaltene Hohlfadenpaket nun einem Einbettverfahren unterworfen wird, bei welchem die Hohlfadenenden eingebettet werden. Anschließend können die Hohlfadenenden durch Entfernen eines Teils der Einbettung freigelegt, d.h. wieder geöffnet werden. Innerhalb einer Schicht des Hohlfadenpaketes können die porösen Hohlfäden mit Vorteil parallel angeordnet sein. Es ist jedoch auch eine regellose Anordnung der Hohlfäden möglich. Die Hohlfäden benachbarter Schichten können sich darüberhinaus vorzugsweise kreuzen. Das Ausstanzen der Filterelemente kann auch bei gleichzeitigem Abschweißen der Schnittstellen erfolgen.

Der Querschnitt des Hohlfadenpaketes kann beliebig sein, insbesondere rund, viereckig oder sechseckig.

Auch die porösen Hohlfäden können einen beliebigen Querschnitt aufweisen, also beispielsweise einen runden, ovalen, lobalen und dergl. Querschnitt.

Geeignet sind alle porösen Hohlfäden, die eine Filtrierung einer Dispersion beim Anlegen einer treibenden Kraft, beispielsweise eines Druckgefälles, bewirken, wobei die Auswahl der am besten geeigneten Hohlfäden anhand einfacher Vorversuche getroffen werden kann. Zur Herstellung geeigneter poröser Hohlfäden sind alle bekannten organischen und anorganischen Werkstoffe geeignet, aus denen sich poröse Hohlfäden herstellen lassen. Die Auswahl des jeweils geeigneten Werkstoffs für die Hohlfäden richtet sich nach den chemischen und physikalischen Eigenschaften der zu filtrierenden Dispersion.

Unter Hohlfäden werden rohr- bzw. röhrchenförmige Gebilde mit beliebigen Abmessungen und Wandstärken verstanden, also beispielsweise auch sogenannte Kapillarmembranen,Hohlfasern, tubuläre Membranen, Röhrchen, Rohre, Schläuche usw. Diese können flexibel oder mehr oder weniger biegesteif sein.

Der Hohlfadeninnendurchmesser beträgt im allgmeinen 150 bis 5500 µm. Die Wandstärke der Hohlfäden sollte möglichst gering sein, ohne daß die Hohlfäden jedoch bei der erforderlichen Druckdifferenz kollabieren. Eine Wandstärke im Bereich von 50 bis 1500 µm wird diesen Anforderungen in der Regel gerecht.

Der (Nenn-)Durchmesser der Poren der porösen Wand der Hohlfäden richtet sich nach dem jeweiligen Einsatzgebiet und den hierfür spezifischen Anforderungen und liegt üblicherweise im Bereich von 0,05 bis 10 µm.

Die maximale Länge der porösen Hohlfäden sollte unter Berücksichtigung ihres Innendurchmessers bemessen werden, wobei das Verhältnis von Hohlfadenlänge zu Hohlfadeninnendurchmesser bis zu einem Wert von 1000 vorteilhaft ist. Die maximale Länge der porösen Hohlfäden sollte jedoch höchstens die Hälfte der Länge des Hohlfadenpakets betragen.

Das erfindungsgemäße Verfahren und die erfindungsgemäße Vorrichtung sind geeignet zum Abfiltern von Feststoffteilchen aus einem Gas(-Gemisch) oder einer Flüssigkeit bzw. einem Flüssigkeitsgemisch, hierunter fällt auch die Sterilfiltration von Flüssigkeiten und Gasen in der pharmazeutischen, biotechnologischen und chemischen Industrie, die Reinstwassergewinnung in der Elektronikindustrie, die Entkeimungsfiltration in der Getränkeindustrie (Bier, Wein, Säfte), die Filtrierung von Treibstoffen (z.B. für Flugzeuge), die Filtrierung von zu analysierenden Fluiden vor den Analysengeräten, die Abgas- und Abluftreinigung u. dgl.

Das erfindungsgemäße Verfahren und die erfindungsgemäße Vorrichtung sind darüberhinaus zum Abtrennen von Flüssigkeitströpfchen aus Gasen und Flüssigkeiten geeignet, so z.B. zum Abfiltrieren von Öltröpfchen aus Kompressorluft, Wassertröpfchen aus Treibstoffen u. dgl.

Die Vorteile des erfindungsgemäßen Verfahrens und der erfindungsgemäßen Vorrichtung kommen insbesondere bei hochpermeablen Hohlfäden, also solchen mit einer Wand, die ein großes Porenvolumen aufweist, und/oder Hohlfäden mit einem kleinen Hohlraumquerschnitt (Lumen) und/oder einer groen Hohlfadenfilterkerzenlänge zur Geltung.

Um eine möglichst gleichmäßige Filtrierleistung über die gesamte Länge des Hohlfadenpakets zu erreichen, kann das Hohlfadenpaket erfindungsgemäß so ausgestaltet werden, daß in Strömungsrichtung für die zu filtrierende Dispersion die Packungsdichte der porösen Hohlfäden zunimmt und/oder die Porengröße (der Porendurchmesser) der Hohlfäden zunimmt und/oder das Porenvolumen, also die Anzahl der Poren pro Flächeneinheit, zunimmt und/oder der Hohlfadendurchmesser abnimmt, um bereits bei gleichbleibender Packungsdichte mehr Filterfläche pro Volumeneinheit zu erhalten, und/oder die Länge der porösen Hohlfäden größer wird. Alle diese Ausgestaltungsmöglichkeiten können - wie bereits angedeutet - einzeln oder in beliebiger Kombination gewählt werden.

Mit der erfindungsgemäßen Vorrichtung werden somit u.a. folgende wesentliche Vorteile erreicht:
- Die Länge der Hohlfadenfilterkerze kann verlängert werden ohne Zunahme des Druckverlustes in den Hohlfäden und ohne nennenswerte Zunahme des Gesamtdruckverlustes der Filterkerze.
- Die Verlängerung der Hohlfadenfilterkerze führt zu einer der Verlängerung direkt proportionalen Erhöhung der Filtrierleistung.
- Es läßt sich ein Hohlfadenpaket mit hoher Packungsdichte bei gleichmäßiger Durchströmbarkeit erreichen.
- Die Filterleistung kann in Strömungsrichtung der zu filtrierenden Dispersion unterschiedlich bemessen werden, also beispielsweise zu- oder abnehmen.
- Der Druckverlust in den porösen Hohlfäden ist wesentlich geringer als bei herkömmlichen Hohlfadenfilterkerzen mit parallel zur Längsachse der Filterkerze angeordneten Hohlfäden.

Die Dicke (Wandstärke) des aus der Einbettmasse gebildeten den Strömungskanal für die zu filtrierende Dispersion umschließenden Rohres ist so zu bemessen, daß es den im betrieblichen Einsatz angewendeten Drücken standhält.

Eine erfindungsgemäße Hohlfadenfilterkerze kann dadurch erhalten werden, daß eine entsprechende Anzahl von Hohlfadenschichten übereinandergestapelt und die Hohlfadenenden in an sich bekannter Weise dann eingebettet werden. Es ist jedoch auch möglich, auf gleiche Weise zunächst kürzere Filterkerzen-Abschnitte herzustellen und mehrere dieser Abschnitte dann zu einer Hohlfadenfilterkerze gewünschter Länge zusammenzufügen. Die einzelnen Abschnitte können zu diesem Zweck durch Verkleben, Verschweißen, durch Zusammendrücken mit zwischengelegten Dichtungen oder auf andere Weise miteinander verbunden werden.

In jedem der beiden geschilderten Fälle können zwischen einzelnen Hohlfadenschichten und/oder den einzelnen Abschnitten Verstärkungsmittel wie Stützscheiben, Stützringe, Lochscheiben, textile oder metallische Gewebe u. dgl. angeordnet werden. Diese können auch so angeordnet und mit eingebettet werden, daß sie eine Armierung der aus Einbettmasse, z.B. einer Vergußmasse, gebildeten Wand des Strömungskanals für die zu filtrierende Dispersion bewirken. Auf diese Weise ist es dann nämlich unter Umständen möglich, die Wandstärke geringer zu bemessen und auf diese Weise Einbettmaterial zu sparen und Filterfläche zu gewinnen.

Die Erfindung wird nachfolgend anhand der Zeichnung näher erläutert. Es zeigt:
- Figur 1a: einen Abschnitt der Vorrichtung in perspektivischer Darstellungsweise,
- Figur 1b: eine Ausführungsform der Vorrichtung in Draufsicht,
- Figur 2: die Wirkungsweise der Vorrichtung in vereinfachter schematischer Darstellungsweise,
- Figur 3: eine Ausführungsform mit geschlossenem Gehäuse,
- Figur 4: drei Vorrichtungen in einem gemeinsamen Gehäuse.

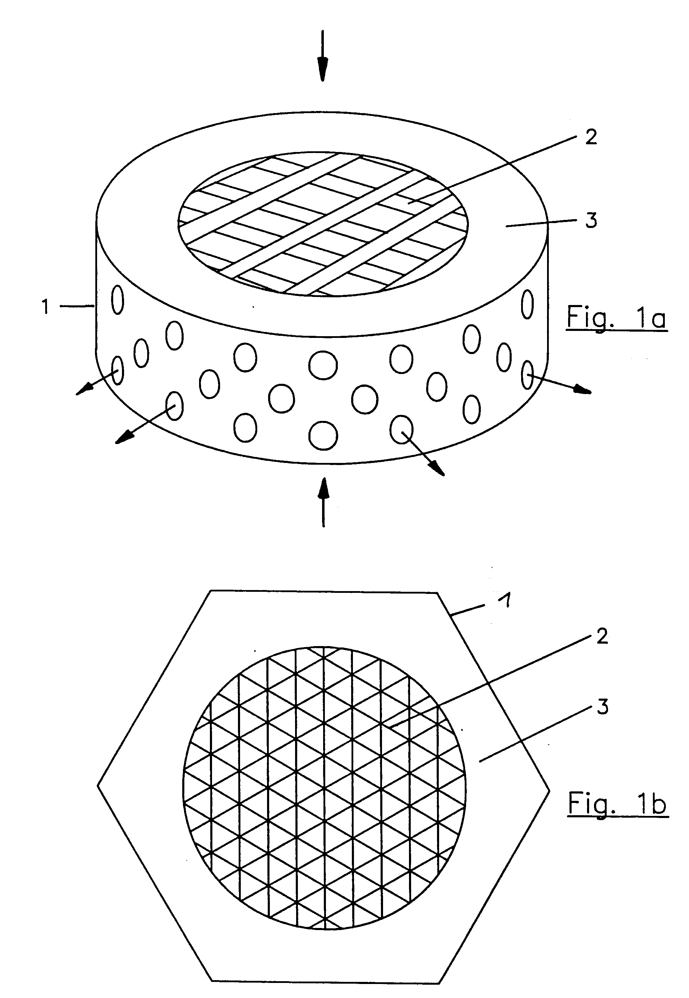

Figur 1a zeigt einen Abschnitt 1 der erfindungsgemäßen Vorrichtung, bei welchem die porösen Hohlfäden 2 einer Schicht parallel zueinander angeordnet sind und die Hohlfäden 2 benachbarter Schichten sich kreuzen und an den Kreuzungspunkten ggf. berühren. Die Hohlfäden 2 münden mit ihren offenen Enden an der Umfangsfläche der rohrförmig ausgebildeten den Strömungskanal für die zu filtrierende Dispersion umschließenden Einbettmasse 3. Der Strömungskanal wird von der Einbettmasse 3 begrenzt, in welcher die Enden der porösen Hohlfäden 2 eingebettet sind. Die Zuführung für die zu filtrierende Dispersion befindet sich an den Stirnseiten des Abschnittes 1 der Vorrichtung, wie durch die beiden senkrecht eingezeichneten Pfeile angedeutet ist. Das Permeat (Filtrat) tritt zunächst durch die Poren der Hohlfäden 2 in das Lumen der Hohlfäden 2 und danach aus den offenen Enden der Hohlfäden 2 aus, wie durch einige eingezeichnete Pfeile angedeutet. Dieses Ausführungsbeispiel zeigt sehr deutlich, daß die Länge des Abschnittes 1 der Vorrichtung, d.h. der mit Hohlfäden 2 gefüllte Strömungskanal für die zu filtrierende Dispersion, beliebig verlängert werden kann, ohne daß sich die Länge der Hohlfäden 2 vergrößert. Eine erfindungsgemäße Vorrichtung läßt sich durch Übereinanderstapeln einer Vielzahl des in Figur 1a dargestellten Abschnittes 1 herstellen oder dadurch, daß die Länge des mit Hohlfäden 2 gefüllten Strömungskanals für die zu filtrierende Dispersion wenigstens doppelt so groß wie die maximale Länge der porösen Hohlfäden 2 bemessen wird. Die maximale Länge der porösen Hohlfäden 2 beträgt dann höchstens die Hälfte der Länge des mit porösen Hohlfäden 2 gefüllten Strömungskanals für die zu filtrierende Dispersion, also des Hohlfadenpaketes.

Figur 1b zeigt eine erfindungsgemäße Vorrichtung 1 beliebiger Länge in Draufsicht. Auch hierbei sind die porösen Hohlfäden 2 schichtweise übereinanderangeordnet, wobei die Hohlfäden 2 einer Schicht parallel zueinander und im gleichen gegenseitigen Abstand voneinander angeordnet sind. Die Hohlfäden 2 benachbarter Schichten kreuzen sich hierbei unter einem Winkel von 60° bzw. 120°. Der Strömungskanal für die zu filtrierende Dispersion ist hierbei ebenfalls kreisförmig, während die Außenkontur der Vorrichtung (Filterkerze) 1 einen sechseckigen Querschnitt aufweist. Die offenen Enden der porösen Hohlfäden 2 münden auch hier an der Außenfläche der rohrförmigen außen sechseckig ausgebildeten Einbettmasse 3 für die porösen Hohlfäden 2. Diese Figur zeigt sehr deutlich, daß sich mit der vorliegenden Erfindung eine sehr gleichmäßige Verteilung und eine sehr geordnete Anordnung der Hohlfäden 2 erreichen läßt. Die Packungsdichte läßt sich dabei auf einfache Weise beispielsweise durch Verringerung des gegenseitigen Abstands der porösen Hohlfäden 2 vergrößern und umgekehrt.

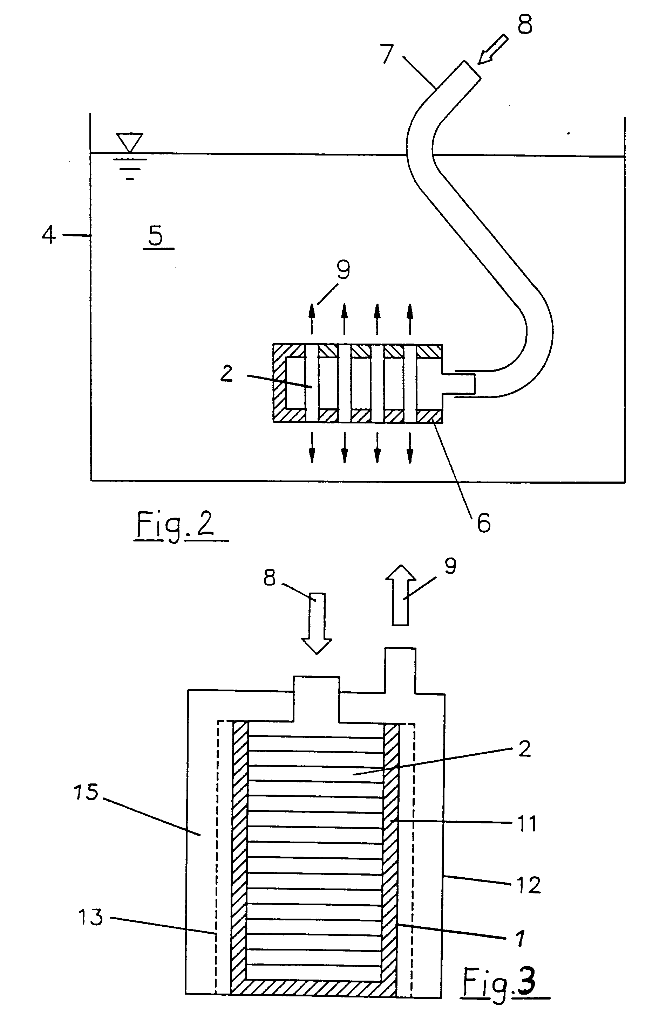

In Figur 2 ist in vereinfachter schematischer Darstellungsweise die Wirkungsweise der erfindungsgemäßen Vorrichtung dargestellt. Eine erfindungsgemäße Filterkerze 6 ist hierbei in einem mit Permeat (Filtrat) 5 gefüllten Behälter 4 angeordnet. Die Vorrichtung (Filterkerze) ist an einer Stirnseite verschlossen, während die gegenüberliegende Stirnseite mit einer Schlauchleitung 7 verbunden ist, die die Zuführung für eine zu filtrierende Dispersion 8 bildet. Die porösen Hohlfäden 2 sind auch hierbei im wesentlichen senkrecht zur Längsachse des Strömungskanals für die zu filtrierende Dispersion angeordnet und werden von der Dispersion im wesentlichen quer, also senkrecht zu ihrer Längsachse, angeströmt und umströmt. Die permeablen Bestandteile der Dispersion (Permeat; Filtrat), die durch die Poren der Wand der Hohlfäden 2 in das Lumen der Hohlfäden 2 gelangen, verlassen die Hohlfäden 2 in der durch die Pfeile 9 dargestellten Weise und Richtung. An dieser Ausführungsform wird deutlich, daß gemäß der Erfindung der längste Strömungsweg der permeierten Bestandteile der Dispersion im Lumen der Hohlfäden 2 wesentlich kürzer ist als der längste Strömungsweg der Dispersion beim Umströmen der Hohlfäden 2 vor der Filtration. Dies wird dadurch erreicht, daß, wie die Darstellung deutlich zeigt, die größte Länge der porösen Hohlfäden 2 wesentlich kleiner ist als die Länge des mit Hohlfäden 2 gefüllten Strömungskanals für die zu filtrierende Dispersion. Natürlich können auch mehrere Filterkerzen 6 in dem Behälter 4 angeordnet und an eine gemeinsame oder individuelle Zuführleitung 7 angeschlossen sein.

Bei der in Figur 3 dargestellten Ausführungsform ist die erfindungsgemäße Vorrichtung 1 in einem geschlossenen Gehäuse 12 angeordnet, das lediglich eine Eintrittsöffnung für die zu filtrierende Dispersion 8 und eine Austrittsöffnung für das Filtrat 9 aufweist. Die rohrförmig ausgebildete Einbettmasse 11 für die porösen Hohlfäden 2 ist hierbei von einem Stützgitter 13 umgeben. Das aus den porösen Hohlfäden 2 austretende Filtrat tritt hierbei durch das Stützgitter 13 zunächst in den Sammelraum 15, der die Filterkerze ringkanalförmig umgibt.Der übrige Aufbau der Vorrichtung 1 entspricht dem der in Figur 2 dargestellten und zuvor beschriebenen Filterkerze 6.

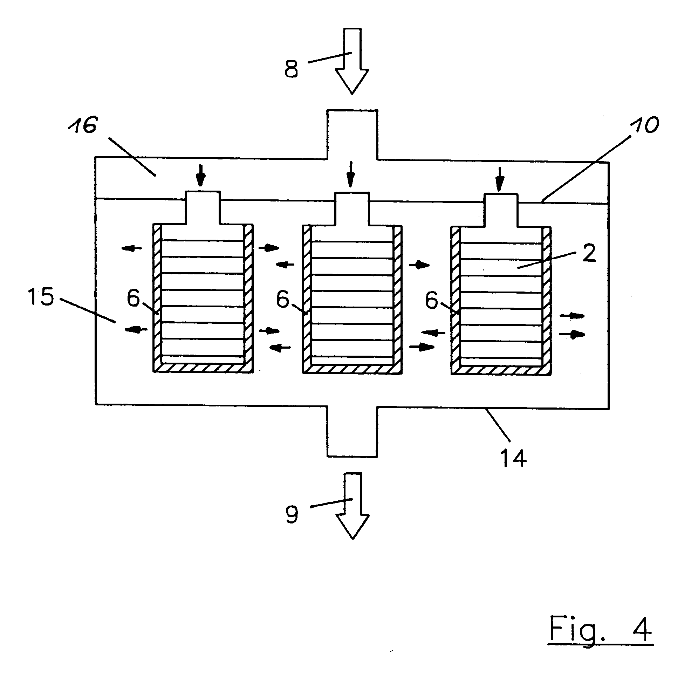

Bei der in Figur 4 dargestellten Ausführungsform sind insgesamt drei erfindungsgemäße Filterkerzen 6 auf einer gemeinsamen Trennwand 10 angeordnet, die den Verteilerraum 16 für die zu filtrierende Dispersion 8 von dem Sammelraum 15 für das abzuführende Filtrat 9 trennt. Im übrigen werden die genannten Räume 15 und 16 von dem Gehäuse 14 begrenzt. Die Wirkungsweise dieser Vorrichtung ergibt sich aus der Beschreibung der Figuren 2 und 3 und den weiter oben gemachten Ausführungen im übrigen von selbst.

Die Figuren 2 bis 4 machen somit deutlich, daß die erfindungsgemäße Vorrichtung einzeln oder in mehreren Exemplaren in einem offenen Behälter (Figur 2), einzeln in einem der Größe der Vorrichtung (Filterkerze) angepaßten geschlossenen Gehäuse (Figur 3) oder in mehreren Exemplaren in einem gemeinsamen geschlossenen Gehäuse (Figur 4) angeordnet sein kann. Eine Anpassung der erfindungsgemäßen Filterkerze an besehende Einrichtungen ist somit möglich, ohne daß die Länge der Filterkerze eine leistungsbegrenzende Größe darstellt.

## Patentansprüche

1. Verfahren zum Filtrieren von gasförmigen oder flüssigen Dispersionen durch die poröse Wand von Hohlfäden durch Einstellen und Aufrechterhalten einer Druckdifferenz zwischen Dispersionsseite und Filtratseite (Permeatseite), bei welchem die permeablen Bestandteile der Dispersion nur durch die Poren der Wand der Hohlfäden strömen, ohne daß Teile oder Anteile der Dispersion auf andere Art und Weise abgeführt werden (Dead-End-Filtrierverfahren), dadurch gekennzeichnet, daß die Hohlfäden von der Dispersion im wesentlichen quer angeströmt werden und daß der längste Strömungsweg der permeierten Bestandteile der Dispersion im Lumen der Hohlfäden wesentlich kürzer ist als der längste Strömungsweg der Dispersion beim Umströmen der Hohlfäden vor dem Filtrieren.

2. Verfahren nach Anspruch 1, dadurch gekennzeichnet, daß die Hohlfäden im wesentlichen senkrecht zu ihrer Längsachse angeströmt werden.

3. Vorrichtung zum Durchführen des Verfahrens nach Anspruch 1 und 2 mit einem mit zum Filtrieren der Dispersion bestimmten porösen Hohlfäden gefüllten Strömungskanal für die zu filtrierende Dispersion und wenigstens einer Zuführung zu dem Strömungskanal, dadurch gekennzeichnet, daß die porösen Hohlfäden im wesentlichen quer zur Längsachse des Strömungskanals und in einer Vielzahl von übereinander angeordneten Hohlfadenschichten angeordnet sind, daß die offenen Enden der Hohlfäden in einer rohrförmig ausgebildeten Einbettmasse eingebettet sind, welche den Strömungskanal für die zu filtrierende Dispersion umschließt und die für die Dispersion undurchlässig ist, daß der Strömungskanal keine Abführung für die Dispersion aufweist und daß die größte Länge der Hohlfäden wesentlich kleiner ist als die Länge des mit den Hohlfäden gefüllten Strömungskanals für die Dispersion.

4. Vorrichtung nach Anspruch 3, dadurch gekennzeichnet, daß die porösen Hohlfäden im wesentlichen senkrecht zur Längsachse des Strömungskanals für die zu filtrierende Dispersion angeordnet sind.

## Claims

1. Process for filtering gaseous or liquid dispersions through the porous wall of hollow filaments by creating and maintaining a pressure differential between the dispersion side and the filtrate side (permeate side), in which the permeable components of the dispersion flow only through the pores in the wall of the hollow filaments without the discharge of parts or components of the dispersion in any other manner (dead-end filtration), characterised in that the dispersion flows substantially transversely through the hollow filaments, and the longest flow path of the permeated components of the dispersion in the lumen of the hollow filaments is substantially shorter than the longest flow path of the dispersion when flowing round the hollow filaments before filtration.

2. Process according to claim 1, characterised in that the hollow filaments are met by the flow substantially perpendicular to their longitudinal axis.

3. Device for carrying out the process according to claims 1 and 2, having a flow channel for the the dispersion to be filtered, which is filled with porous hollow filaments intended for filtering the dispersion, and having at least one feed to the flow channel, characterised in that the porous hollow filaments are arranged substantially transverse to the longitudinal axis of the flow channel and in large numbers one above another, in that the open ends of the hollow filaments are embedded in a tubular embedding compound, which encloses the flow channel for the dispersion to be filtered and which is impermeable to the dispersion, in that the flow channel has no outlet for the dispersion, and in that the greatest length of the hollow filaments is substantially smaller than the length of the hollow filament-filled flow channel for the dispersion.

4. Device according to claim 3, characterised in that the porous hollow filaments are arranged substantially perpendicular to the longitudinal axis of the flow channel for the dispersion to be filtered.

## Revendications

1. Procédé de filtration de dispersions gazeuses ou liquides à travers la paroi poreuse de fibres creuses par établissement et maintien d'une différence de pression entre le côté dispersion et le côté filtrat (côté perméat), procédé dans lequel les constituants de la dispersion qui peuvent traverser la membrane s'écoulent exclusivement à travers les porcs de la paroi des fibres creuses, sans que des parties ou des fractions de dispersion soient évacuées d'une manière différente (procédé de filtration statique), caractérisé par le fait que la dispersion arrive sensiblement perpendiculairement aux fibres creuses et par le fait que le trajet le plus long dans le lumen des fibres creuses des constituants la dispersion qui ont traversé la membrane est sensiblement plus court que le trajet de la dispersion qui entoure les fibres creuses avant filtration.

2. Procédé selon la revendication 1, caractérisé par le fait que l'écoulement a lieu sensiblement perpendiculairement à l'axe longitudinal des fibres creuses.

3. Dispositif pour la mise en oeuvre du procédé selon les revendications 1 et 2, comportant un canal qui reçoit la dispersion à filtrer et est rempli de fibres creuses poreuses pour la filtration de la dispersion et au moins une entrée de canal, caractérisé par le fait que les fibres creuses poreuses sont disposées sensiblement perpendiculairement à l'axe longitudinal du canal en une pluralité de couches superposées, par le fait que les extrémités ouvertes des fibres creuses sont noyées dans une masse de scellement de forme tubulaire qui entoure ledit canal recevant la dispersion à filtrer et est imperméable à celle-ci, par le fait que le canal ne comporte pas de sortie de la dispersion et que la longueur maximale des fibres creuses est nettement plus faible que la longueur du conduit rempli de fibres creuses.

4. Dispositif selon revendication 3, caractérisé par le fait que les fibres creuses poreuses sont disposées sensiblement perpendiculairement à l'axe longitudinal du canal recevant la dispersion à filtrer.
